# EUROPEAN PATENT APPLICATION

(11) **EP 2 081 301 A1**
(43) Date of publication of application: **22.07.2009**
(21) Application number: 08100496.2
(22) Date of filing: 15.01.2008
(51) Int. Cl.: H04B 3/54

(54) **Computer power line communication adaptor and device line communication adaptor**

(71) Applicant: E-Media Solutions (EMS) B.V., 2718 SC Zoetermeer (NL)
(72) Inventor: de Vaal, Dirk Frans Hermanus, 2906 GB Capelle aan de IJssel (NL); Jansink, Robin Jan Nicolaas, 2805 SX Gouda (NL)
(74) Representative: Ketelaars, Maarten F.J.M.

(57) **Abstract**

The invention relates to a computer power line communication adaptor (40) arranged to be plugged into a socket of a power line architecture. The computer power line communication adaptor (40) is arranged to enable communication via the power line architecture between a computer and at least one remote device. The computer power line communication adaptor (40) comprises a processing unit (41), a power line interface (43) and a computer interface (42). The processing unit (41) is arranged to
- receive at least one media signal from the computer via the computer interface (42) and transmit the at least one media signal to the at least one remote device via the power line interface (43), and
- receive at least one control signal from the at least one remote device via the power line interface (43) and transmit the at least one control signal to the computer via the computer interface (42).

## Description

### TECHNICAL FIELD

The invention relates to a computer power line communication adaptor, a device power line communication adaptor and a system comprising a power line architecture, a computer power line communication adaptor and a device power line communication adaptor.

### STATE OF THE ART

Power lines are available in most buildings, such as houses, offices, factories etc. Buildings usually comprise a power line network providing electrical power to sockets in the different rooms of such buildings.

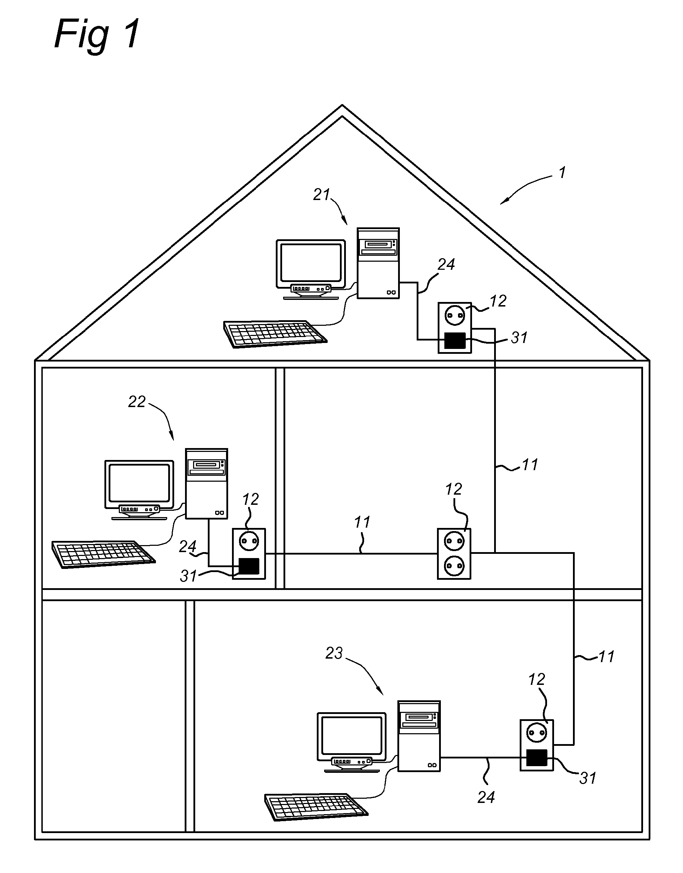

It is known in the prior art that the power line architecture in a building may also be used as a computer network architecture allowing two or more computers in the building to form a computer network. The computers may be connected to the power line architecture using power line communication adaptors. The power line communication adaptors are arranged to be plugged into a socket and comprise an input-output device for receiving and transmitting data. The power line communication adaptor is arranged to receive a network signal from a first computer and transmit the network signal via the power line architecture to a second power line communication adaptor plugged into a second socket. This second power line communication adaptor is arranged to receive the network signal and transmit the network signal to a second computer, connected to the second power line communication adaptor. Accordingly, network signals may be transmitted from the second to the first computer. An example of such a power line computer network is explained in more detail here with reference to Fig. 1.

Fig. 1 schematically depicts a building 1, comprising a power line architecture, comprising power lines 11 connecting a number of sockets 12. In the building 1, three computers 21, 22, 23 are positioned at different locations. In some of the sockets 12, a power line communication adaptor 31 is plugged.

Each computer 21, 22, 23 is connected with the power line communication adaptor 31 via a network cable 24. The power line communication adaptors 31 are arranged to receive a network signal from a computer directly via network cable 24 and transmit the network signal via the power line architecture to the other computers and the power line communication adaptors 31 are arranged to receive a network signal from remote computers indirectly via the power line architecture and transmit the network signal to a nearby computer directly via the network cable 24.

According to the prior art, power line communication adaptors are provided that allow using the power line architecture provided in a building to be used as a computer network. The control of the network communication between the different computers is managed in a traditional way, such as using a master-slave network architecture using a peer-to-peer architecture for data transmission.

However, when a user wants access to files stored at the first computer at a first position within the building from a second position within the building remote from the first position, the prior art requires the user to have a second computer available at the second position to set up a network connection with the first computer.

It is an object to provide power line communication adaptors that provide a user with easy remote access to a computer.

### SHORT DESCRIPTION

According to an aspect there is provided computer power line communication adaptor arranged to be plugged into a socket of a power line architecture, wherein the computer power line communication adaptor is arranged to enable communication via the power line architecture between a computer and at least one remote device, wherein the computer power line communication adaptor comprises a processing unit, a power line interface and a computer interface, wherein the processing unit is arranged to
- receive at least one media signal from the computer via the computer interface and transmit the at least one media signal to the at least one remote device via the power line interface, and
- receive at least one control signal from the at least one remote device via the power line interface and transmit the at least one control signal to the computer via the computer interface.

According to an embodiment the at least one media signal comprises a video signal and the computer interface comprises a video input to receive the video signal from the computer. According to a further embodiment the at least one media signal comprises an audio signal and the computer interface comprises an audio input to receive an audio signal from the computer. According to an embodiment the control signal comprises at least one of a keyboard signal, a mouse signal, a joy-stick signal, a game controller signal. According to an embodiment the computer interface comprises at least one control output to transmit the at least one control signal to the computer. These measurements allow easy remote access to video and audio files stored at a computer at a remote location from a user.

According to an embodiment the processing unit is arranged to combine the at least one media signal to a combined media signal. This allows efficient transmission of the media signals and allows for use of data reduction techniques, limiting the required data transmission capacity.

According to a further aspect there is provided a device power line communication adaptor arranged to be plugged into a socket of a power line architecture, wherein the device power line communication adaptor is arranged to enable communication via the power line architecture between at least one device and at least one remote computer, wherein the device power line communication adaptor comprises a processing unit, a power line interface and a device interface, wherein the processing unit is arranged to
- receive at least one media signal from the computer via the power line interface and transmit the at least one media signal to the at least one device via the device interface, and
- receive at least one control signal from the at least one device via the device interface and transmit the at least one control signal to the computer via the power line interface.

According to an embodiment the at least one device comprises a display and the at least one media signal comprises a video signal and the device interface comprises a video output to transmit the video signal to the at least one display. According to an embodiment the at least one device comprises a speaker or speaker set and the at least one media signal comprises an audio signal and the device interface comprises an audio output to transmit the audio signal to the speaker. According to an embodiment the device interface comprises a control input to receive control input from at least one of a keyboard, a mouse, a joystick, a game controller. These measurements allow easy access to media files at a remote computer via the power line architecture. The speaker may be a speaker with a built in amplifier or the audio signal may be transmitted to the speaker via speaker set (e.g. an HIFI set) comprising an amplifier.

According to an embodiment the processing unit is arranged to receive a combined media signal and is arranged to split the combined media signal in two or more different media signals. This allows efficient transmission of media data.

According to an embodiment the device interface comprises a wireless control input to wireless receive control input. This allows easy control for a user, using a wireless control input, such as a wireless keyboard or the like.

According to an aspect, there is provided a system, comprising a power line architecture, a power line communication adaptor as described above and a device power line communication adaptor according to the above.

### SHORT DESCRIPTION OF THE DRAWINGS

Embodiments will now be described, by way of example only, with reference to the accompanying schematic drawings in which corresponding reference symbols indicate corresponding parts, and in which:
- Figure 1 schematically depicts power line computer network according to the prior art,
- Figure 2 schematically depicts an embodiment,
- Figures 3a and 3b schematically depict a computer power line communication adaptor and a device power line communication adaptor according to an embodiment.

### DETAILED DESCRIPTION

According to the embodiments power line communication adaptors are provided for transmission of media signals and control signals from a computer located at a first position to at least one further device located at a second position. The at least one further device may be one of: a television, a speaker (comprising an amplifier), a speaker set (e.g. HIFI set), a keyboard. The media signals may be a video signal, a sound signal etc. The control signal may be a keyboard control signal, a mouse control signal etc. Such power line communication adaptors enable control of a computer located at a first position by a user at a second location by using the power line architecture as a communication channel. There is no computer needed at the second location.

Two power line communication adaptors are provided: a computer power line communication adaptor to connect the computer to the power line architecture and a device power line communication adaptor to connect the at least one device to the power line architecture. It is noted that the functionality of the computer power line communication adaptor and the device power line communication adaptor may be combined in a single unit.

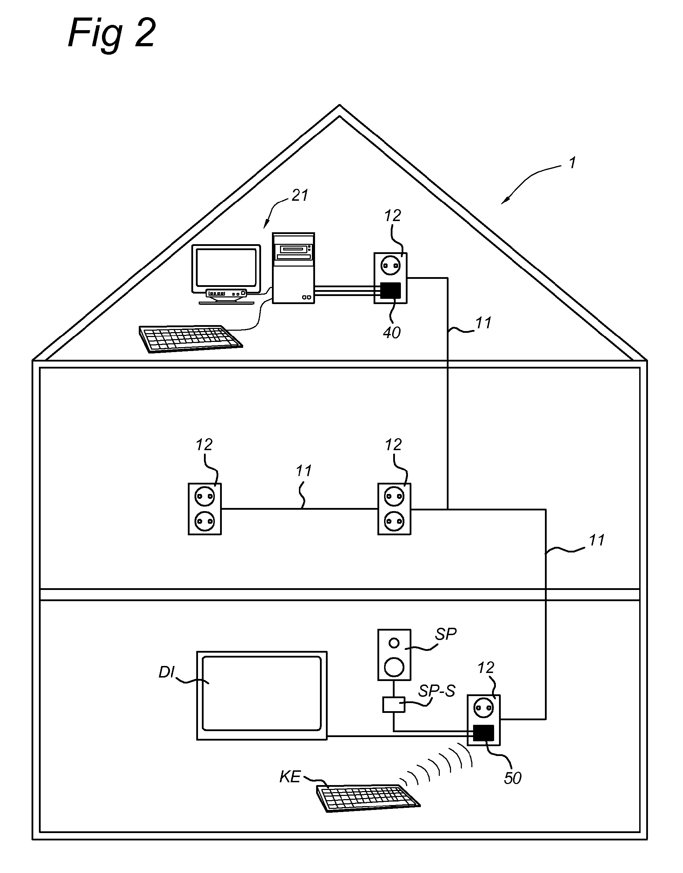

Fig. 2 shows building 1 comprising the power line architecture as described above with reference to Fig. 1, comprising power lines 11 and sockets 12. The computer power line communication adaptor 40 is plugged in a first socket 12 in the vicinity of a computer 21. The device power line communication adaptor 50 is plugged into a second socket 12 in the vicinity of at least one further device, such as a display DI, a speaker SP with a speaker set SP-S, and a control device, such as a keyboard KE. The device power line communication adaptor 50 may be arranged to communicate wirelessly with the keyboard KE, for instance using Bluetooth.

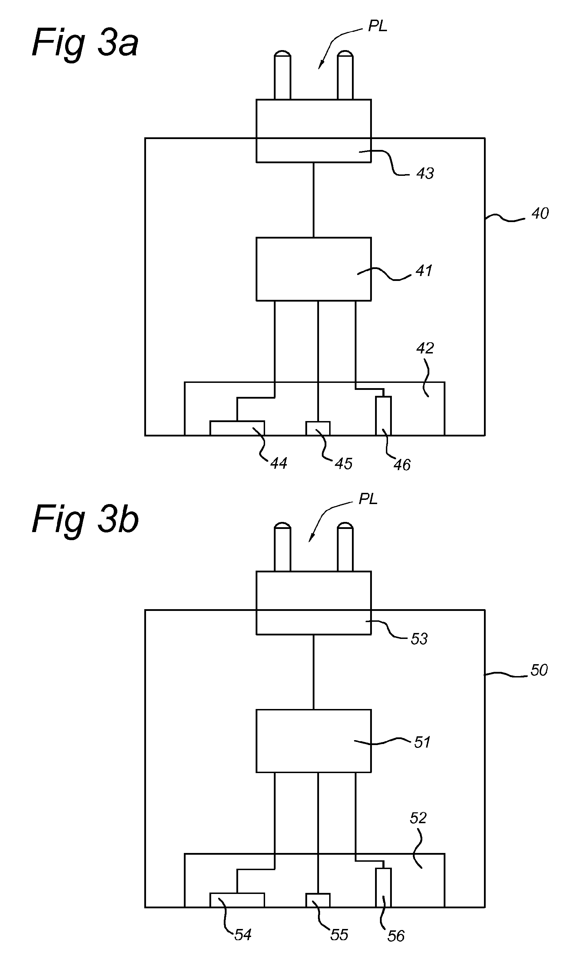

The computer power line communication adaptor is explained in more detail below with reference to Fig. 3a, and the device power line communication adaptor is explained in more detail below with reference to Fig. 3b.

Fig. 3a schematically shows a computer power line communication adaptor 40, comprising a processor unit 41, a computer interface 42 and a power line interface 43. The computer power line communication adaptor 40 is arranged to be plugged into a socket of a power line architecture as explained above. Therefore, the computer power line communication adaptor 40 may comprise a plug PL. The computer power line communication adaptor 40 is arranged to enable communication via the power line architecture between a computer and at least one remote device.

The processor unit 41 is arranged to communicate with the computer interface 42 and the power line interface 43. The processing unit 41 is arranged to
- receive at least one media signal from the computer via the computer interface 42 and transmit the at least one media signal to the at least one remote device via the power line interface 43, and
- receive at least one control signal from the at least one remote device via the power line interface 43 and transmit the at least one control signal to the computer via the computer interface 42.

The at least one media signal may comprise a video signal and the computer interface 42 may comprise a video input 44 to receive the video signal from the computer 21. The video input 44 may be arranged to be connected to the video card of the computer 21 for transmission of all kinds of video signals which are normally transmitted by the video card of the computer 21 to the display of the computer 21. This may be a VGA connection or a DVI connection. Connection between the video card and the video input 44 may be accomplished by using a suitable cable. The connection may also be wireless.

The at least one media signal may comprise an audio signal and the computer interface 42 may comprise an audio input 46 to receive an audio signal from the computer 21. The audio input 46 may be arranged to be connected to the audio card of the computer 21 for transmission of all kinds of audio signals which are normally transmitted by the audio card of the computer 21 to the speaker of the computer 21. Connection between the audio card and the audio input 46 may be accomplished by using a suitable cable, e.g. a mini-jack-mini-jack cable. The connection may also be wireless.

Also other connections may be provided such as S/PDIF or COAX for digital audio.

The processing unit 41 may be arranged to combine the at least one media signal to a combined media signal. This allows easy transmission of the media signals through the power line architecture. The processing unit 40 may be arranged to combine the received media signals to a single combined media signal.

The control signals may comprise at least one of a keyboard signal, a mouse signal, a joy-stick signal, a game controller signal. Such signals may be received from the remote at least one device, for instance comprising a keyboard, a mouse, a joy-stick, a game controller and the like.

The computer interface 42 may comprise at least one control output 45 to transmit the at least one control signal to the computer 21. This may for instance be a USB connector for transmitting of the control signals to the computer 21. The connection between the computer power line communication adaptor 40 may be connected to the computer 21 by a USB-to-USB cable that can connect the control output 45 to an USB port of the computer 21.

Fig. 3b schematically shows a device power line communication adaptor 50, comprising a processor unit 51, a device interface 52 and a power line interface 53. The device power line communication adaptor 50 is arranged to be plugged into a socket of a power line architecture as explained above. Therefore, the device power line communication adaptor 50 may comprise a plug PL. The device power line communication adaptor 50 is arranged to enable communication via the power line architecture between at least one device and remote computer 21.

The processor unit 51 is arranged to communicate with the device interface 52 and the power line interface 53. The processing unit 51 is arranged to
- receive at least one media signal from the computer via the power line interface 53 and transmit the at least one media signal to the at least one device via the device interface 52, and
- receive at least one control signal from the at least one device via the device interface 52 and transmit the at least one control signal to the computer via the power line interface 53.

The at least one device may comprise a display DI and the at least one media signal may comprise a video signal. The device interface 52 may therefore comprise a video output to transmit the video signal to the at least one display. The display may be any kind of display DI, such as a television, a computer display. The video output may be DVI connection to transmit the video signal through a DVI cable to the display DI. However, also other connections may be provided, such as a SCART/component video connection or a HDMI connection.

The at least one device may comprise a speaker SP or speaker set SP-S and the at least one media signal may comprise an audio signal. The device interface 52 may therefore comprise an audio output 56 to transmit the audio signal to the speaker SP. The audio output 56 may be a mini-jack connector and the connection between the device power line communication adaptor 50 and the speaker SP may be a RCA connector. This allows easy connection to a HIFI-set. The speaker SP may comprise a built in amplifier or the audio signal may be transmitted to the speaker SP via a speaker set SP-S comprising an amplifier.

Also other connections may be provided such as S/PDIF or COAX for digital audio.

The processing unit 51 is arranged to receive a combined media signal and is arranged to split the combined media signal in two or more different media signals.

The device interface 52 may comprise a control input to receive control input from at least one of a keyboard, a mouse, a joystick, a game controller. The control input may be a USB input or any other suitable input, to receive control input from control devices such as mentioned. The keyboard KE may have an integrated mouse, for instance provided by a track ball or a touch pad. The USB input may communicate wirelessly with the at least one device.

The device interface 52 may comprise a wireless control input to wireless receive control input. At least one of the control inputs may be wireless, for instance supporting a Bluetooth connection with a wireless keyboard KE.

According to an embodiment there is provided a system, comprising a power line architecture, a computer power line communication adaptor 40 as described above with reference to Fig. 3a and a device power line communication adaptor 50 as described above with reference to Fig. 3b.

### Further remarks

The processing units 41, 51 of both the computer power line communication adaptor 40 and the device power line communication adaptor 50 may be formed as a (micro) processor that is programmed to perform the functionality as described in the embodiments. The processing units 41, 51 may comprise a memory that stores programming lines that are readable and accessible by the processors to perform the functionality as described in the embodiments. The processing units 41, 51 may also be formed as a chip with hardware arranged to perform the functionality as described in the embodiments.

Furthermore, the processing units 41, 51 may be arranged to process the signals received from the computer interface 42 or device interface 52 respectively to allow transmission of these signals via the power line architecture. The processing units 41, 51 may be arranged to transform signals received via the computer interface 42 and device interface 52 respectively into data packages that can be transmitted via the power line and transform data packages received via the respective power line interfaces 43, 53 into the original signals.

Power line communication adaptors may be conceived that comprise both the functionality of the computer power line communication adaptor 40 and the device power line communication adaptor 50. This allows flexible use of the power line communication adaptor.

The descriptions above are intended to be illustrative, not limiting. Thus, it will be apparent to one skilled in the art that modifications may be made to the invention as described without departing from the scope of the claims set out below.

## Claims

1. Computer power line communication adaptor (40) arranged to be plugged into a socket of a power line architecture, wherein the computer power line communication adaptor (40) is arranged to enable communication via the power line architecture between a computer and at least one remote device, wherein the computer power line communication adaptor (40) comprises a processing unit (41), a power line interface (43) and a computer interface (42), wherein the processing unit (41) is arranged to
- receive at least one media signal from the computer via the computer interface (42) and transmit the at least one media signal to the at least one remote device via the power line interface (43), and
- receive at least one control signal from the at least one remote device via the power line interface (43) and transmit the at least one control signal to the computer via the computer interface (42).

2. Computer power line communication adaptor (40) according to claim 1, wherein the at least one media signal comprises a video signal and the computer interface comprises a video input to receive the video signal from the computer.

3. Computer power line communication adaptor (40) according to any one of the preceding claims, wherein the at least one media signal comprises an audio signal and the computer interface comprises an audio input to receive an audio signal from the computer.

4. Computer power line communication adaptor (40) according to any one of the preceding claims, wherein the processing unit is arranged to combine the at least one media signal to a combined media signal.

5. Computer power line communication adaptor (40) according to any one of the preceding claims, wherein the control signal comprises at least one of a keyboard signal, a mouse signal, a joy-stick signal, a game controller signal.

6. Computer power line communication adaptor (40) according to any one of the preceding claims, wherein the computer interface comprises at least one control output to transmit the at least one control signal to the computer.

7. Device power line communication adaptor (50) arranged to be plugged into a socket of a power line architecture, wherein the device power line communication adaptor (50) is arranged to enable communication via the power line architecture between at least one device and at least one remote computer, wherein the device power line communication adaptor (50) comprises a processing unit (51), a power line interface (53) and a device interface (52), wherein the processing unit (51) is arranged to
- receive at least one media signal from the computer via the power line interface (53) and transmit the at least one media signal to the at least one device via the device interface (52), and
- receive at least one control signal from the at least one device via the device interface (52) and transmit the at least one control signal to the computer via the power line interface (53).

8. Device power line communication adaptor (50) according to claim 7, wherein the at least one device comprises a display and wherein the at least one media signal comprises a video signal and the device interface (52) comprises a video output to transmit the video signal to the at least one display.

9. Device power line communication adaptor (50) according to any one of the claims 7 - 8, wherein the at least one device comprises a speaker (SP) or speaker set (SP-S) and wherein the at least one media signal comprises an audio signal and the device interface (52) comprises an audio output to transmit the audio signal to the speaker (SP) or speaker set (SP-S).

10. Device power line communication adaptor (50) according to any one of the claims 7 - 9, wherein the processing unit (51) is arranged to receive a combined media signal and is arranged to split the combined media signal in two or more different media signals.

11. Device power line communication adaptor (50) according to any one of the claims 7 - 10, wherein the device interface (52) comprises a control input to receive control input from at least one of a keyboard, a mouse, a joystick, a game controller.

12. Device power line communication adaptor (50) according to claim 11, wherein the device interface (52) comprises a wireless control input to wireless receive control input.

13. System, comprising a power line architecture, a power line communication adaptor according to claim 1 and a device power line communication adaptor according to claim 7.
